(19) **Europäisches Patentamt / European Patent Office / Office européen des brevets**

(11) **EP 4 078 211 B1**

(12) **EUROPÄISCHE PATENTSCHRIFT**

(45) Veröffentlichungstag und Bekanntmachung des Hinweises auf die Patenterteilung:
**03.06.2026 Patentblatt 2026/23**

(21) Anmeldenummer: **21805937.6**

(22) Anmeldetag: **03.11.2021**

(51) Internationale Patentklassifikation (IPC):
**G01S 5/02** *(2010.01)* **G01S 11/08** *(2006.01)*
**G07C 9/00** *(2020.01)*

(52) Gemeinsame Patentklassifikation (CPC):
**G01S 5/02216; G01S 11/08; G07C 9/00309;**
G07C 2209/61; G07C 2209/63

(86) Internationale Anmeldenummer:
**PCT/EP2021/080523**

(87) Internationale Veröffentlichungsnummer:
**WO 2022/096513 (12.05.2022 Gazette 2022/19)**

(54) **VERFAHREN ZUR BESTIMMUNG EINER ENTFERNUNG ZWISCHEN ZWEI OBJEKTEN UNTER MITWIRKUNG EINES DRITTEN OBJEKTS**

METHOD FOR DETERMINING A DISTANCE BETWEEN TWO OBJECTS WITH THE INVOLVEMENT OF A THIRD OBJECT

PROCÉDÉ DE DÉTERMINATION D'UNE DISTANCE ENTRE DEUX OBJETS AVEC L'AIDE D'UN TROISIÈME OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: 04.11.2020 PCT/EP2020/081015
04.11.2020 PCT/EP2020/081014

(43) Veröffentlichungstag der Anmeldung:
**26.10.2022 Patentblatt 2022/43**

(73) Patentinhaber: **Lambda: 4 Entwicklungen GmbH 22299 Hamburg (DE)**

(72) Erfinder: **REIMANN, Rönne 22769 Hamburg (DE)**

(74) Vertreter: **Raffay & Fleck Patentanwälte Stephansplatz 2-6 20354 Hamburg (DE)**

(56) Entgegenhaltungen:
WO-A1-2020/165134     US-A1- 2002 008 615
US-A1- 2020 099 561     US-A1- 2020 118 372

## Beschreibung

Die Erfindung betrifft ein Verfahren zur Bestimmung einer Entfernung zwischen zwei Objekten unter Mitwirkung eines dritten Objekts.

Aus der EP 2710398 B1 ist es bekannt, passiv den Standort in einem Ankernetz durch Mithören der Kommunikation der Anker zu bestimmen, indem mehrere Entfernungen bestimmt und daraus der Standort bzw. der Abstand zu einem oder mehreren Ankern bestimmt wird.

Aus der US 2020/118372 A1 ist es bekannt unter Einsatz eines passiven Sniffers in einem Kfz die Entfernung zu einem Schlüssel zu bestimmen, nachdem die Kommuikation durch einen aktiven Knoten des Kfz begonnen wurde. Dabei werden aus einer Vielzahl vorhandener Antennen die am besten geeignetsten auf Basis von RSSI Werten bestimmt. Dabei werden unterschiedlich polarisierte Antennen verwendet und Rundlaufzeiten oder Phasenverschiebungen pro Frequenz, bei der ein Roundtrip vorgenommen wird, gemessen oder Differenzen dazwischen bestimmt. Dazu wird die Veränderung der Phase über einen Rundlauf bei einer ersten Frequenz mit der Veränderung der Phase bei einem zweiten Rundlauf mit einer zweiten Frequenz verglichen und dabei die Änderung von der ersten Frequenz zur zweiten Frequenz berücksichtigt. Eine phasenkohärente Umschaltung zwischen den Frequenzen wird nicht durchgeführt. Auch ist der Phasenunterschied bei der Umschaltung nicht bekannt.

Zusammenfassung:
Die Erfindung wird durch die nachfolgenden Ansprüche definiert

Detaillierte Beschreibung:
Aufgabe der vorliegenden Erfindung ist eine Abstandbestimmung zwischen mindestens zwei, insbesondere mindestens drei, Objekten, wobei ein erstes der Objekte mehrere Signale mit unterschiedlichen Frequenzen, insbesondere nacheinander, insbesondere eine Frequenzhopping, aussendet, wobei auch mindestens ein drittes Objekt Signale versendet, insbesondere ein Frequenzhopping durchführt, und das zweite der Objekte die Signale des ersten und des mindestens einen dritten Objekts empfängt und daraus die Entfernung zwischen dem ersten und dem zweiten Objekten bestimmt wird, ohne eine indirekte Bestimmung, beispielsweise über den Abstand zwischen dem ersten und dem dritten Objekt zu erfordern, wobei insbesondere zweites und drittes Objekt zeitsynchronisiert sind und/oder insbesondere in fester relativer räumlicher Orientierung angeordnet sind.

Das erste Objekt kann insbesondere ein Autorisierungsmittel, wie Keyfob oder Handy darstellen. Das zweite und dritte Objekt sind insbesondere Teil einer Anordnung, zu der mittels des Autorisierungsmittels Zugang angestrebt und/oder gewährt wird. Diese Anordnung kann beispielsweis ein Gebäude, ein Kraftfahrzeug oder eine Barriere, ein Automat oder Computer sein.

Dies wird unter anderem gelöst durch ein Verfahren zur, insbesondere direkten, Abstandbestimmung zwischen zwei Objekten, wobei ein erstes der Objekte mindestens ein Erstobjekt-Signal, insbesondere mehrere Erstobjekt-Signale, mit unterschiedlichen Erstobjekt-Frequenzen sendet, und

wobei das mindestens eine zweite Objekt die Erstobjektsignale des ersten Objekts empfängt und darauf basierend die Entfernung zwischen dem ersten und dem mindestens einen zweiten Objekt bestimmt wird, wobei das mindestens eine zweite und mindestens ein drittes Objekt takt- und/oder zeitsynchronisiert sind, wobei das mindestens eine zweite Objekt außer zur Zeitsynchronisation keine Signale und/oder das mindestens eine zweite Objekt keine zur Abstandsbestimmung genutzten Signale sendet und/oder abgesehen von der Zeitsynchronisation passiv ist, wobei insbesondere das mindestens eine zweite Objekt keine Funksignale sendet, dadurch gekennzeichnet, dass das mindestens eine dritte Objekt mindestens eine Drittobjektsignal sendet. Dieses Drittobjektsignal kann zur Entfernungsbestimmung, beispielsweise auf Basis von Phasenmessung (phase based ranging, PBR) und/oder Laufzeitmessungen (Pulslaufzeit, ToF) genutzt und/oder geeignet sein und/oder aber allein zur Abstimmung des Timings oder zur Übermittlung von Informationen für die Verfahrensführung, beispielsweise zu dessen Initialisierung, genutzt werden. Es findet aber in jedem Fall irgend eine Funkkommunikation zwischen erstem und mindestens einem Drittobjekt statt.

Besonders bevorzugt wird auf Basis des je mindestens einen Erst- und/oder Drittsignal eine Zeitsynchronisation zwischen erstem und zweiten und/oder zwischen zweitem und mindestens einem Dritten und/oder erstem und mindestens einem dritten Objekt berechnet und/oder verbessert.

Mit Vorteil sind oder beinhalten Erst- und/oder Drittobjektsignale jeweils mindestens ein Frequenzhopping. Dies erhöht die Genauigkeit des Verfahrens.

Unter einem Frequenzhopping ist insbesondere das aufeinanderfolgende Senden auf unterschiedlichen Frequenzen zu verstehen. Beidseitig ist ein Frequenzhopping, wenn jeweils zwei Objekte, insbesondere nacheinander, ein Frequenzhopping durchführen.

Insbesondere liegen die Frequenzen, insbesondere des Frequenzhoppings, in einer Spanne von 25 bis 100 MHz, insbesondere überspannen Sie eine solche Spanne vollständig. Insbesondere liegen die Frequenzen, insbesondere des Frequenzhoppings, im Bereich von 2 bis 6 GHz. Insbesondere liegt zwischen benachbarten aber nicht notwendig aufeinanderfolgenden Frequenzen, insbesondere des Frequenzhoppings, ein Abstand im Bereich von 0,1 bis 17 MHz, insbesondere im Bereich von 0,5 bis 10 MHz.

In einer ersten Ausgestaltung kann das dritte Objekt zwischen mindestens zwei Drittobjekt-Frequenzen phasenkohärent wechseln und/oder so wechseln, dass der Phasenunterschied am ersten und/oder zweiten Objekt bekannt ist und/oder der Phasenunterschied dem ersten und/oder zweiten Objekt bekannt gemacht wird.

In einer zweiten Ausgestaltung, die auch mit der ersten kombiniert werden kann, kann das erste Objekt zwischen mindestens zwei der Erstobjekt-Frequenzen des mindestens einen Erstobjekt-Signals phasenkohärent wechseln und/oder so wechseln, dass der Phasenunterschied am zweiten und/oder dritten Objekt bekannt ist und/oder der Phasenunterschied dem zweiten und/oder dritten Objekt bekannt gemacht wird.

Bekannt sein kann der Phasenunterschied oder -sprung beim Wechsel zwischen Frequenzen beispielsweise dadurch, dass er vorbestimmt ist oder aus anderen bekannten Größen, beispielsweise der Dauer einer, insbesondere unmittelbar, vorausgehenden Abstrahlung bei einer Frequenz, ableitbar ist.

Der Phasenunterschied entsteht beim Umschalten zwischen zwei Frequenzen in der Regel, aus technischen Gründen, kann aber auch vermieden werden. Dabei kann das Umschalten zwischen zwei Frequenzen mit kurzer Unterbrechung oder unterbrechungsfrei durchgeführt werden. Zum Zeitpunkt des unterbrechungsfreien Wechsels springt die Phase bzw. während des Wechselns mit Unterbrechung springt die Phase der gedacht in die Unterbrechung fortgedachten Signale vor und nach dem Umschalten. Zu dem Wechselzeitpunkt ohne Unterbrechung oder zu einem gedachten Wechselzeitpunkt in der Unterbrechung, insbesondere in der Mitte der Unterbrechung und/oder am Ende des Signals vor der Unterbrechung oder am Beginn des Signals nach der Unterbrechung, liegt ein definierter Phasensprung vor. Dieser ist der Phasenunterschied.

Bevorzugt wechselt dabei das mindestens eine Drittobjekt zwischen den mindesten zwei Drittobjektfrequenzen insbesondere zum Empfang der Erstobjektsignale, wobei diese Drittobjektfrequenzen dann insbesondere identisch oder zumindest ähnlich sind zu den jeweiligen Erstobjektfrequenzen, und/oder zum Senden mindestens eines, insbesondere mehreren, eigenen Drittobjektsignals/en.

Dabei empfängt das mindestens eine zweite Objekt die Erst- und Drittobjektsignale des ersten und des mindestens einen dritten Objekts und es wird daraus oder darauf basierend die Entfernung zwischen dem ersten und dem mindestens einen zweiten Objekt bestimmt.

Bevorzugt wird mindestens je eine Entfernung zwischen dem ersten und jedem zweiten Objekt bestimmt.

Insbesondere werden vom zweiten Objekt gesendete Signale nicht zur Abstandsbestimmung genutzt und/oder wird das Verfahren so geführt, dass sie dafür keine relevante Rolle spielen und/oder sie die Genauigkeit nicht oder nur unwesentlich verbessern, insbesondere um weniger als 10% der Genauigkeit, insbesondere weniger als 2% der Genauigkeit, also bei einer Genauigkeit von 1m/100m beispielsweise um weniger als 10cm/100m, insbesondere um weniger als 2cm/100, also nicht auf eine Genauigkeit besser als 90cm/100m bzw. nicht auf eine Genauigkeit von besser als 98cm/100m. Insbesondere werden vom zweiten Objekt gesendete Signale ausschließlich zur Zeitsynchronisation genutzt. Zwar wird eine Zeitsynchronisation oder die Synchronität der Taktgeber stark bevorzugt, doch kann diese auch durch andere Mittel als durch Signale der Objekte erreicht werden. Sofern sie (auch) durch Signale des zweiten Objekts bewirkt wird, werden diese Signale indirekt, durch Nutzen der Kenntnis über die Zeiten in den Objekten oder ihre Drift oder deren Synchronität zur Entfernungsbestimmung genutzt, aber bevorzugt nicht die Signale selbst, insbesondere nicht ihre Laufzeiten und nicht ihre Phasenlagen, auch wenn diese möglicherweise für die Zeitsynchronisation genutzt wurden.

Stellt man sich also den Verfahrensablauf so vor, dass die Zeitsynchronisation unter anderem mit einer ersten Menge Signale des zweiten Objekts erreicht wurde und eine zweite Menge Signale des ersten und mindestens einen dritten Objekt gesendet wurden, wird das Verfahren insbesondere so geführt, dass die Genauigkeit der Entfernungsbestimmung unter Nutzung von Signalen der ersten Menge, der zweiten Menge und der synchronisierten Uhren nicht um mehr als 10%, insbesondere nicht mehr als 2%, der Genauigkeit der Entfernungsbestimmung allein auf Basis der zweiten Menge und der synchronisierten Uhren besser wäre als die Genauigkeit der Entfernungsbestimmung allein auf Basis der zweiten Menge und der synchronisierten Uhren.

Mit Vorteil weist das mindestens eine Drittobjekt-Signal unterschiedliche Drittobjekt-Frequenzen auf und/oder wechselt zwischen diesen.

Die Signale, insbesondere Erst- und Drittobjektsignale, sind insbesondere Funksignale.

Insbesondere wird die Entfernung basierend auf Frequenzen und Phasen (phase based ranging), insbesondere auch Amplituden, der am mindestens einen zweiten Objekt empfangenen Erst- und Drittobjektsignale sowie den Zeitdifferenzen zwischen erstem und drittem und zwischen drittem und zweitem Objekt und insbesondere auch Informationen über die abgestrahlten Erst- und/oder Drittobjekt-signale wie Zeitpunkte der Abstrahlung bestimmter Merkmale, beispielsweise Frequenzwechsel und/oder deren Zeitpunkte der Erst- und/oder Drittobjektsignale bestimmt.

Optional können darüber hinaus vom mindestens einem dritten Objekt bereitgestellte Informationen, insbesondere Phasenkorrekturinformation, über das mindestens eine empfangene Erstobjekt-Signal und/oder vom ersten Objekt bereitgestellte Informationen, insbesondere Phasenkorrekturinformation, über das mindestens eine Drittobjekt-Signal verwendet werden.

Insbesondere weist das mindestens eine Erst- und/oder das mindestens eine Drittobjektsignal mindestens ein Merkmal pro Frequenz und/oder pro Signal auf.

Unter Merkmalen des Signals sind insbesondere Änderungen des Signals zu verstehen, wie Änderung der Amplitude, der Polarisation, der abstrahlenden Antenne (Wechsel zwischen Antennen), der Frequenz und/oder Phase, so kann ein solches Merkmal beispielsweise der Beginn oder das Ende der Abstrahlung einer Frequenz darstellen. Es können aber auch aggregierte Gruppen von Merkmalen verwendet werden, die in manchen Situationen die Robustheit des Verfahrens steigern. So können beispielsweise aufmodulierte Pakete oder Syncworte als Gruppen von Merkmalen verwendet werden.

Gelöst wird die Aufgabe auch durch ein System aufweisend mindestens ein erstes, ein zweites, insbesondere eine Mehrzahl größer eins, insbesondere, größer zwei, zweiter Objekte, und mindestens ein drittes Objekt, wobei das erste Objekt zur Abstrahlung von Erstobjekt-Signalen unterschiedlicher Frequenz eingerichtet ist und bevorzugt das mindestens eine dritte Objekt zur Abstrahlung von Drittobjekt-Signalen unterschiedlicher Frequenz eingerichtet sind und alle Objekte zum Empfang von Signalen eingerichtet ist, wobei das mindestens eine zweite und das dritte Objekt eingerichtet sind, eine Takt- und/oder Zeitsynchronisation durchzuführen sind, und wobei das System mindestens eine Steuerung aufweist, die eingerichtet ist, dass erfindungsgemäße Verfahren durchzuführen, dadurch gekennzeichnet, dass

das dritte Objekt eingerichtet ist, zwischen mindestens zwei Drittobjekt-Frequenzen phasenkohärent zu wechseln und/oder so zu wechseln, dass der Phasenunterschied am ersten und/oder zweiten Objekt bekannt ist und/oder der Phasenunterschied dem ersten und/oder zweiten Objekt bekannt gemacht wird und/oder dass das erste Objekt eingerichtet ist, zwischen mindestens zwei der Erstobjekt-Frequenzen des mindestens einen Erstobjekt-Signals phasenkohärent zu wechseln und/oder so zu wechseln, dass der Phasenunterschied am zweiten und/oder dritten Objekt bekannt ist und/oder der Phasenunterschied dem zweiten und/oder dritten Objekt bekannt gemacht wird.

Gelöst wird das System auch durch ein Zugangssystem aufweisend mindestens eine Zugangsbeschränkungsvorrichtung, wobei die Zugangsbeschränkungsvorrichtung eingerichtet ist, den Zugang zu gewähren und/oder zu verweigern, insbesondere mittels eines Zugangsbeschränkungsmittels, weiter aufweisend mindestens ein erstes, ein zweites, insbesondere eine Mehrzahl größer eins, insbesondere größer zwei, zweiter Objekte, und mindestens ein drittes Objekt, wobei das erste Objekt zur Abstrahlung von Erstobjekt-Signalen unterschiedlicher Frequenz eingerichtet ist und insbesondere das dritte Objekt zur Abstrahlung von Drittobjekt-Signalen unterschiedlicher Frequenz eingerichtet ist und alle Objekte zum Empfang von Signalen eingerichtet sind, wobei das mindestens eine zweite und das dritte Objekt eingerichtet sind, eine Takt- und/oder Zeitsynchronisation durchzuführen, und wobei das dritte Objekt eingerichtet ist, zwischen mindestens zwei Drittobjekt-Frequenzen, insbesondere der Drittobjekt-Signale, und/oder wobei das erste Objekt eingerichtet ist, zwischen mindestens zwei Erstobjekt-Frequenzen der Erstobjekt-Signale zu wechseln und wobei das System mindestens eine Steuerung aufweist, die eingerichtet ist, dass erfindungsgemäße Verfahren durchzuführen dadurch mindestens eine Entfernung zwischen mindestens einem zweiten Objekt und dem ersten Objekt zu bestimmten, wobei die Zugangsbeschränkungsvorrichtung eingerichtet ist, den Zugang nicht zu verweigern und/oder den Zugang zu gewähren, falls die mindestens eine bestimmte Entfernung zwischen dem mindestens einen zweiten Objekt zu dem ersten Objekt eine vorbestimmte Entfernung nicht überschreitet und/oder innerhalb eines vorbestimmten Entfernungsbereichs liegt und/oder die bestimmte Position des ersten Objekts innerhalb eines ersten und/oder außerhalb eines zweiten vorbestimmten Bereichs, und/oder den Zugang zu verweigern und/oder den Zugang nicht zu gewähren, wenn die mindestens eine, insbesondere alle, bestimmte Entfernung(en) zwischen dem mindestens einen zweiten Objekt und dem ersten Objekt die vorbestimmte Entfernung überschreitet und/oder außerhalb des vorbestimmten Entfernungsbereichs liegt und/oder die bestimmte Position des ersten Objekts außerhalb eines ersten und/oder innerhalb eines zweiten vorbestimmten Bereichs,

dadurch gekennzeichnet, dass

das dritte Objekt eingerichtet ist, zwischen mindestens zwei Drittobjekt-Frequenzen phasenkohärent zu wechseln und/oder so zu wechseln, dass der Phasenunterschied am ersten und/oder zweiten Objekt bekannt ist und/oder der Phasenunterschied dem ersten und/oder zweiten Objekt bekannt gemacht wird und/oder dass das erste Objekt eingerichtet ist, zwischen mindestens zwei der Erstobjekt-Frequenzen des mindestens einen Erstobjekt-Signals phasenkohärent zu wechseln und/oder so zu wechseln, dass der Phasenunterschied am zweiten und/oder dritten Objekt bekannt ist und/oder der Phasenunterschied dem zweiten und/oder dritten Objekt bekannt gemacht wird.

Unter phasenkohärentem Umschalten oder Wechsel zwischen zwei Frequenzen wird insbesondere verstanden, dass die Phase nach der Umschaltung relativ zur Phasenlage vor der Umschaltung bekannt ist. Dies ist der Fall, wenn die Veränderung der Phase beim Umschalten null ist oder einen vorbekannten Wert beträgt. Wird so gewechselt, dass der Phasenunterschied bekannt ist, ist der Unterschied der Phasenlage vor und nach der Umschaltung bekannt. Dabei kann der Wert auch dadurch vorbekannt sein, dass er aus vorbekannten Größen ableitbar ist, beispielsweise aus der Dauer der, insbesondere unmittelbar, vorausgehenden Abstrahlung bei einer Frequenz.

Dies ist beispielsweise dann gegeben, wenn beim Umschalten immer eine definierte Phasenlage eingestellt wird und die Dauer der Abstrahlungen seit der letzten Umschaltung gemessen wird oder bekannt ist.

Mit besonderem Vorteil wird also die Kenntnis über den Phasensprung beim Wechsel der Frequenz genutzt, um eine einfache Messung bzw. Berechnung zu ermöglichen, beispielswiese zur Korrektur der Messung der Änderung der Phasenverschiebung. Bei einem Phasensprung von null, wird auch diese Kenntnis insbesondere genutzt, indem die Messung der Änderung der Phasenverschiebung direkt verwendet wird, um eine Entfernung zu berechnen, sie wird sozusagen nur um null korrigiert.

Die direkte Ermittlung der Entfernung verbessert die Genauigkeit und/oder Geschwindigkeit gegenüber dem Verfahren aus EP 2710398 B1 deutlich.

Zwar ist es bekannt, Zeitgeber in zwei Objekten zu synchronisieren, sowohl über kabelgebundene als auch kabellose Verbindungen. So existiert beispielsweise das NTP Protokoll. Auch ist im Rahmen einer Bluetoothverbindung eine Synchronisation vorgesehen, in der jedes Objekt eine freilaufende 28 bit Uhr mit einem Takt von 3,2 kHz aufweist und jedes Objekt sein Offset zu einer Zentralen Uhr ermittelt und diesen regelmäßig korrigiert. Hier wird eine Synchronisation mit einer Genauigkeit von etwa 125 ns erreicht. Auch ist eine verbesserte Zeitsynchronisation bekannt, beispielsweise aus der DE112014004426T5 oder "Synchronization in Wireless Sensor Networks Using Bluetooth", Casas et al., Third International Workshop on Intelligent Solutions in Embedded Systems, 2005., ISBN: 3-902463-03-1. Dies kann beispielsweise zur Energieeinsparung genutzt werden, indem ein Objekt nur zu bestimmten Zeitschlitzen empfangsbereit gehalten wird, die dem anderen Objekt bekannt sind, um zu entsprechenden Zeiten zu senden. Die Synchronisation der Uhren ist auch zumindest bei einseitiger relativ starker Störung des Funkkanals noch möglich, wobei bekannte Entfernungsmessungen bei derartigen Störungen unmöglich oder sehr ungenau wird oder sehr viel Zeit benötigt. Doch ist von der Genauigkeit einer Zeitsynchronisation von der Synchronisation auf einen Takt eines empfangenen Signals am Empfänger des Signals zu unterscheiden. Hier findet keine Synchronisation zweier Uhren an zwei Objekten statt, sondern wird das empfangene Objekt so eingestellt, dass es mit dem eingehenden Signal synchronisiert ist. Dabei spielt die Signallaufzeit keine Rolle, da dafür unbeachtlich ist, wann das Signal gesendet wurde und/oder wie lange es zur Übertragung benötigt hat.

Mit besonderem Vorteil sind oder werden das mindestens eine zweite und das dritte Objekt auf 10ns oder besser, insbesondere im Bereich zwischen 10ns und 100ps, zeit- und/oder taktsynchronisiert. Dies erhöht die Genauigkeit des Verfahrens.

Mit besonderem Vorteil sind oder werden das mindestens eine zweite und das erste und/oder das erste und das mindestens eine dritte Objekt zeit- und/oder taktsynchronisiert, insbesondere auf 10ns oder besser, insbesondere im Bereich zwischen 10ns und 100ps, zeit- und/oder taktsynchronisiert. Dies erhöht die Genauigkeit des Verfahrens.

Auch kann der Unterschied der Drift zwischen den Zeitgebern des ersten und mindestens einen zweiten oder des mindestens einen zweiten und mindestens einen dritten Objekts bestimmt und zur Korrektur verwendet werden. Dazu sind zahlreiche Verfahren aus dem Stand der Technik bekannt.

Mit Vorteil wird für jedes an einem zweiten Objekt empfangene Erst- und Drittobjektsignal ein zu dessen Amplitude proportionalen Wert und ein Phasenwert bestimmt und insbesondere daraus jeweils eine komplexe Zahl bestimmt, die für die Abstandsbestimmung zwischen dem ersten und dem zweiten Objekt genutzt wird. Insbesondere wird aus einer Mehrzahl der komplexen Zahlen der Erst-und/oder Drittobjektsignale eine Matrix, insbesondere eine Autokorrelationsmatrix, gebildet und mittels dieser und beispielsweise MUSIC, CAPON, Vergleich mit, Abstandsberechnung zu und/oder Projektion auf Abstrahl- und- oder Empfangscharakteristika, der Abstand bestimmt. Insbesondere wird mindestens eine komplexe Matrix, insbesondere eine Autokorrelationsmatrix, an einem Zweitobjekt empfangene Erstobjektsignale und/oder mindestens eine Matrix, insbesondere eine Autokorrelationsmatrix, an einem Zweitobjekt empfangene Drittobjekt-signale gebildet. Mit Vorteil erfolgt die Abstandsberechnung mittels Eigenwert- oder Eigenvektorenbestimmung der mindestens einen Matrix und/oder Fouriertransformation der komplexen Werte.

Der Phasenwert wird insbesondere alternativ dadurch bestimmt, dass bezüglich einer Vielzahl von Paaren der Signale mit benachbarter Frequenz jeweils eine auf einen Frequenzabstand normierte Änderung der Phasenverschiebung berechnet wird, also näherungsweise die Ableitung der Phasenverschiebung an einer der oder den Frequenzen des Paars berechnet wird und die dadurch gesammelten Werte zur Bestimmung der Phase der komplexen Zahl an der jeweiligen Frequenz (der zugehörig zu dem zur Amplitude proportionalen Wertes) verwendet wird, insbesondere durch näherungsweise Integration über die Frequenz. Dabei muss nicht bei f = 0 Hz mit der Integration begonnen werden, sondern kann und wird bevorzug ein allen komplexen Zahlen gemeinsamer Offset verwendet, insbesondere die niedrigste Frequenz der, insbesondere ausgewählten, Signale. Insbesondere wird der Phasenwert aus der Signallaufzeit oder Signalrundlaufzeit bestimmt.

Insbesondere wird die normierte Phasenverschiebungsänderung (dPhasenverschiebung (f1,f2)) gewonnen mittels der Formel:

$$\text{dPhasenverschiebung (f1,f2)} = a * RTT(f3) * dFrequenz(f1,f2)$$

oder

$$dPhasenverschiebung\ (f1,f2)\ =\ b\ *\ STT(f3)\ *\ dFrequenz(f1,f2)$$

wobei dFrequenz(f1,f2) die Differenz zwischen den Frequenzen f1 und f2 ist RTT(f3) die doppelte Signallaufzeit oder die Signalrundlaufzeit (Pulslaufzeit, ToF) zwischen ersten und zweitem Objekt bzw. STT die einfache Signallaufzeit (Pulslaufzeit, ToF) bei einer oder mehreren Frequenzen f3, ähnlich zu f1 und/oder f2 und/oder andersherum ist und wobei a bzw. b eine Konstante ist, insbesondere a gleich Pi und b zwei Pi ist

Dabei ist Phasenverschiebung eine Phasenverschiebung bei der Übertragung bei der Frequenz von einem Objekt zum anderen und zurück, die aufgrund der Entfernung auftritt. Sie kann näherungsweise gleichgesetzt werden mit dem Doppelten der Phasenverschiebung, die bei der Übertragung bei der Frequenz von einem Objekt zum anderen aufgrund der Entfernung auftritt.

Frequenzen werden insbesondere als ähnlich angesehen, wenn Sie um weniger als 17MHz, insbesondere weniger als 10 MHz insbesondere weniger als 2 MHz, und/oder weniger als 5%, insbesondere weniger als 2%, der niedrigeren Frequenz voneinander abweichen.

Der komplexe Wert Z für eine Frequenz ergibt sich dann insbesondere mittels:

$$Betrag(Z(f))\ =\ (b\ *\ Amplitude(f)\ +\ offset)$$

Argument(Z(f)) = Summe(dPhasenverschiebung(f(n + 1),fn)) über fn von f0 bis f(n + 1) = f.

Es werden also die Änderungen der Phasenverschiebung aufsummiert und zwar von der niedrigsten Frequenz bis zur fraglichen Frequenz, für die die komplexe Zahl bestimmt werden soll. Dabei ist die niedrigste Frequenz für alle komplexen Zahlen näherungsweise gleich, insbesondere identisch. Zudem sind die Phasenverschiebungsänderungen insbesondere immer für aufeinanderfolgende Frequenzpaare aufzusummieren, bei denen die höhere Frequenz näherungsweise gleich, insbesondere identisch zu der niedrigeren der Frequenzen des nächsten Paares ist, also insbesondere dPhasenverschiebung(f1,fO) + dPhasenverschiebung(f2,f1) + dPhasenverschiebung(f3,f2) + .... + dPhasenverschiebung(f,fn)

mit

$$f\ =\ f(n + 1)$$

f0 ist dabei für alle komplexen Zahlen eines Vektors und/oder einer Matrix näherungsweise gleich, insbesondere gleich.

Dabei sind b und offset Konstanten und ist b insbesondere gleich 1 und offset insbesondere gleich 0. Amplitude(f) ist die bei der Frequenz f gemessene empfangene Amplitude oder ein Mittelwert aus mehreren bei Frequenz f und/oder zu f ähnlichen Frequenzen gemessen Amplituden. Alternativ kann auch die Leistung verwendet werden.

Insbesondere wird aus einer Mehrzahl der komplexen Zahlen eine Matrix, insbesondere eine Autokorrelationsmatrix gebildet. Insbesondere erfolgt dies durch Bildung eines Vektors aus den komplexen Zahlen, in dem die komplexen Zahlen in die Spalten oder Zeilen des Vektors geschrieben werden und dessen Autokorrelationsmatrix gebildet wird. Mittels dieser, beispielsweise mittels bekannter Methoden, beispielsweise MUSIC, CAPON, Vergleich mit, Abstandsberechnung zu und/oder Projektion auf Abstrahl- und- oder Empfangscharakteristika, der Abstand bestimmt. Mit Vorteil erfolgt die Abstandsberechnung mittels Eigenwert- oder Eigenvektorenbestimmung der mindestens einen Matrix und/oder Fouriertransformation der komplexen Werte.

Derartige Vorgehensweisen sind insbesondere bei Multipath-Signalausbreitung vorteilhaft, um eine zuverlässige Bestimmung zu erreichen.

In bestimmten Ausgestaltungen kann es vorteilhaft sein, das mindestens eine zweite und das dritte Objekt in fester relativer räumlicher Lage und Orientierung anzuordnen, beispielsweise wenn die Entfernungsmessung zwecks Zugangskontrolle durchgeführt wird. Dies erleichtert die Berechnung und erhöht die Zuverlässigkeit.

Mit Vorteil werden mit den Erstobjekt- und/oder Drittobjektsignalen Daten übertragen, insbesondere Nutzdaten, insbesondere solche, die für das erfindungsgemäße Verfahren nicht erforderlich sind.

Mit Vorteil sind die Objekte Teile eines Datenübertragungssystems, insbesondere eines Bluetooth, WLAN oder Mobilfunk Datenübertragungssystems. Bevorzugt sind die Erstobjekt und/oder Drittobjektsignale Signale des Datenübertragungssystems und/oder eines Datenübertragungsstandards, beispielsweise Mobilfunkstandard, WLAN oder Bluetooth, die zur Datenübertragung gemäß des Datenübertragungsstandards genutzt werden.

Vorteilhafterweise werden die Erstobjekt- und/oder Drittobjektsignale über mehrere Antennenpfade übertragen, insbesondere mit mehreren Antennen, insbesondere nacheinander, am sendenden Objekt gesendet und/oder mit mehreren Antennen am empfangenen Objekt empfangen.

Bevorzugt ist das erste Objekt ein Autorisierungsmittel, wie Keyfob oder Handy. Mit Vorteil sind das zweite und dritte Objekt Teil einer Anordnung, zu der mittels des Autorisierungsmittels Zugang angestrebt und/oder gewährt wird, wobei die Anordnung insbesondere ein Gebäude, ein Kraftfahrzeug oder eine Barriere, ein Automat und/oder Computer ist.

Bevorzugt wird es, dass das dritte Objekt die Erstobjekt-Signale empfängt und Informationen über die empfangenen Erstobjekt-Signale bereitstellt und diese bei der Berechnung der Entfernung verwendet werden und/oder dass das erste Objekt die Drittobjekt-Signale empfängt und Informationen über die empfangenen Drittobjekt-Signale bereitstellt und diese bei der Berechnung der Entfernung verwendet werden. Dies ist insbesondere dann von Vorteilhaft, wenn der Zeitpunkt der Ausstrahlung und/oder die Phasenlage bei Ausstrahlung im System ansonsten nicht bekannt wären/sind.

Mit besonderem Vorteil ist das mindestens eine zweite Objekt passiv und/oder sendet das mindestens eine zweite Objekt selber keine Signale oder keine zur Abstandsberechnung verwendeten Signale und/oder sendet das mindestens eine zweite Objekt selber im Rahmen des Verfahrens keine Signale oder keine zur Abstandsberechnung verwendeten Signale. Dadurch kann die Verfahrensdauer verkürzt werden und die Sicherung durch die Abstandsbestimmung zwischen erstem und mindestens einem zweitem Objekt versteckt und dadurch sicherer ausgestaltet werden.

Bevorzugt wird das Verfahren so ausgestaltet, dass mindestens eins der sendenden Objekte (erstes und/oder mindestens ein drittes Objekt) zwischen Signalen phasenkohärent, insbesondere ohne Phasensprung oder mit bekanntem Phasensprung wechselt und/oder der Phasensprung lokal gemessen und bei der Entfernungsbestimmung berücksichtig und/oder korrigiert wird und/oder mindestens eins der Objekte aus Signalen eines der anderen Objekte mindestens eine Phasenkorrekturinformation bestimmt, die bei der Abstandsberechnung verwendet wird, insbesondere wobei das erste Objekt zwischen mindestens zwei der Erstobjekt-Frequenzen der Erstobjekt-Signale phasenkohärent wechselt oder/oder das dritte Objekt zwischen mindestens zwei der Drittobjekt-Frequenzen der Drittobjekt-Signale phasenkohärent wechselt und/oder das dritte Objekt mindestens eine Phasenkorrekturinformation aus den Erstobjekt-Signalen ermittelt und/oder das erste Objekt mindestens eine Phasenkorrekturinformation aus den Drittobjekt-Signalen ermittelt und wobei die mindestens eine Phasenkorrekturinformation bei der Abstandsberechnung verwendet werden. Durch eine solche Ausgestaltung, bei der weitere Informationen über die Phasenlage am sendenden Objekt zur Verfügung stehen, kann das Verfahren genauer, robuster und die Berechnung einfacher ausgestaltet werden.

Insbesondere schalten erstes, zweites und/oder drittes Objekt zum Empfang ebenfalls phasenkohärent um. Hilfsweise messen sie den Phasensprung der Phase beim Frequenzwechsel und wird dieser Phasensprung bei der Berechnung korrigiert.

Mit Vorteil schaltet somit nicht nur das sendende Objekt phasenkohärent sondern auch das empfangene, insbesondere wird in jedem Objekt eine PLL phasenkohärent geschaltet.

Mit besonderem Vorteil sind die Zeitpunkte und/oder ist der Zeitplan der Abstrahlungen der Drittobjekt- und/oder der Erstobjekt-Signale vorbestimmt und/oder ist/sind dies(e) dem zweiten Objekt bekannt und/oder werden/wird dies(e) bei der Abstandsberechnung berücksichtigt. Dadurch lässt sich eine genauere Bestimmung und einfachere Berechnung erreichen.

In einer bevorzugten Ausgestaltung beinhaltet das Verfahren die Synchronisation der Zeiten und/oder Takte im mindestens einen zweiten und dritten Objekt, insbesondere drahtlos oder kabelgebunden. Bevorzugt wird vor, nach und/oder während der Durchführung des Verfahrens mindestens eine Zeit- und/oder Taktsynchronisation und/oder -korrektur zwischen dem mindestens einen zweiten und dritten Objekt durchgeführt. Die Synchronisation kann aber auch gegeben sein oder durch andere Verfahren bewirkt werden. Insbesondere sind die Unterschiede der Zeiten und/oder Takte zwischen mindestens einem zweiten und dritten Objekt bekannt und oder synchron. Dies erhöht die Genauigkeit des Verfahrens. Bevorzugt wird auch eine Drift der Uhren des mindestens einen zweiten und/oder dritten Objekts oder einen Unterschied in der Drift der Uhren des mindestens einen zweiten und dritten Objekts bestimmt und bei der Abstandsbestimmung berücksichtigt. Dies erhöht die Genauigkeit des Verfahrens weiter. In einer bevorzugten Ausgestaltung beinhaltet das Verfahren die Synchronisation der Zeiten und/oder Takte zwischen zweitem und erstem Objekt, insbesondere drahtlos. Bevorzugt wird vor, nach und/oder während der Durchführung des Verfahrens mindestens eine Zeit- und/oder Taktsynchronisation und/oder -korrektur zwischen dem ersten und dritten Objekt durchgeführt. Die Synchronisation kann aber auch gegeben sein oder durch andere Verfahren bewirkt werden. Insbesondere sind die Unterschiede der Zeiten und/oder Takte zwischen zweitem und drittem Objekt bekannt und oder synchron, der Abgleich kann insbesondere auch kabelbasiert erfolgen. Dies erhöht die Genauigkeit des Verfahrens. Bevorzugt wird auch eine Drift der Uhren des ersten und/oder dritten Objekts oder einen Unterschied in der Drift der Uhren des zweiten und dritten Objekts bestimmt und bei der Abstandsbestimmung berücksichtigt. Dies erhöht die Genauigkeit des Verfahrens weiter. Verfahren zur Synchronisation und/oder zur Bestimmung von Zeit- und/oder Taktunterschieden und/oder Drift sind aus dem Stand der Technik umfangreich bekannt.

Zeitdifferenzen und/oder Drift können auch indirekt im Dreiecksverhältnis bestimmt werden: Ist beispielsweise die Zeitdifferenz und/oder Drift zwischen X und Y sowie zwischen Y und Z bekannt, kann daraus die Zeitdifferenz und/oder Drift zwischen X und Z berechnet werden.

Bevorzugt bestimmt das zweite und/oder das mindestens eine dritte Objekt seine Zeit und seine Zeitdrift gegenüber dem ersten Objekt.

In einer bevorzugten Ausgestaltung beinhaltet das Verfahren die Synchronisation der Zeiten und/oder Takte im ersten und dritten Objekt, insbesondere drahtlos. Bevorzugt wird vor, nach und/oder während der Durchführung des Verfahrens mindestens eine Zeit- und/oder Taktsynchronisation und/oder -korrektur zwischen dem ersten und dritten Objekt durchgeführt. Dies erhöht die Genauigkeit des Verfahrens, da dadurch auch die Drift ermittelt und berücksichtigt werden kann. Bevorzugt wird auch eine Drift der Uhren des ersten und/oder dritten Objekts oder einen Unterschied in der Drift der Uhren des ersten und dritten Objekts bestimmt und bei der Abstandsbestimmung berücksichtigt. Dies erhöht die Genauigkeit des Verfahrens weiter.

Mit besonderem Vorteil wird die Entfernung zwischen dem mindestens einen zweiten und dem ersten Objekt bestimmt, ohne dazu die Entfernung zwischen erstem und drittem Objekt zu bestimmen und/oder wird die Entfernung zwischen dem ersten und dem mindestens einen zweiten Objekt unabhängig von der Entfernung zwischen erstem und drittem Objekt bestimmt. Dies erhöht die Geschwindigkeit und die Genauigkeit des Verfahrens.

Mit besonderem Vorteil wird das Verfahren mit einer Mehrzahl, insbesondere mit einer gemeinsamen Mehrzahl größere eins, insbesondere größer zwei, insbesondere größer vier, zweiter Objekte und gemeinsamen ersten und insbesondere gemeinsamen zweitem/n und drittem/n Objekten, durchgeführt, wobei bevorzugt die berechneten Abstände, insbesondere zwischen dem ersten und jeweils der Mehrzahl zweiter Objekte, genutzt werden, um eine Kartierung und/oder Positionsbestimmung des ersten Objekts durchzuführen. Durch die Verwendung mehrere, insbesondere örtlich voneinander entfernt angeordneter zweiter und/oder dritter Objekte kann die Zuverlässigkeit und Genauigkeit erhöht werden und ist eine Ortung, beispielsweise mittels Triangulation, möglich.

Das Verfahren wird dabei bevorzugt mehrfach durchgeführt, wobei das mindestens eine zweite und mindestens eine dritte Objekt auch ihre Rollen tauschen können, das erste Objekt aber allen Durchführungen gemein und/oder konstant ist. So kann Beispiel aus einer Mehrzahl von Objekten immer ein wechselnder Teil der Mehrzahl zweite Objekte sein und ein anderer Teil dritte Objekte.

Bevorzugt weisen die Mehrzahl zweiter Objekte eine feste Lage und/oder Orientierung zueinander auf, die insbesondere bekannt ist und/oder durch Funkortung bestimmt wird. Dadurch ist beispielsweise eine einfache Triangulation zur Ortung des ersten Objekts möglich.

Mit Vorteil wird das Verfahren mittels eines erfindungsgemäßen Systems und/oder Zugangssystems ausgeführt. Mit Vorteil ist das System oder Zugangssystem eingerichtet eine oder mehrere vorteilhafte Ausgestaltung(en) des Verfahrens umzusetzen und weist dazu insbesondere eine entsprechend eingerichtete Steuerung auf.

Mit Vorteil übersteigt die Bandbreite der Signale zu keiner Zeit 50 MHz, insbesondere 25 MHz. Dadurch lässt sich Energie einsparen, lassen sich Störungen anderer Prozesse vermeiden und gegenüber breitbandigen Verfahren einfache Bauteile nutzen.

Vorteilhafterweise werden die Signale über mehrere Antennenpfade übertragen, insbesondere mit mehreren Antennen, insbesondere nacheinander, am sendenden Objekt gesendet und/oder mit mehreren Antennen am empfangenen Objekt empfangen.

Bevorzugt sendet das erste und/oder dritte Objekt die Signale auf mehreren Frequenzen nacheinander und/oder aufeinanderfolgend, insbesondere unmittelbar aufeinanderfolgend und/oder senden erstes und drittes Objekt abwechseln aufeinanderfolgend.

Die Berechnung des Abstandes erfolgt beispielsweise wie folgt:

Die am zweiten Objekt gemessenen Phasen/Amplituden vom ersten Objekt abhängig von der Trägerfrequenz werden um den erwarteten/berechneten Fehler aus der bekannten Zeitverschiebung zwischen den Objekten und Zeitdrift der beiden Systemuhren der Objekte korrigiert. Dann können diese Werte z.B. über eine FFT ausgewertet werden. Auch können Vektoren aufgebaut werden (z.B. für verschiedene Antennenpfade), aus denen eine Autokorrelationsmatrix (AKM) erzeugt und in dieser AKM mit hochauflösenden Verfahren, wie MUSIC oder CAPON, nach den Entfernungen gesucht werden.

Unter der Prämisse des phasenkohärenten Frequenzumschaltens bei erstem und drittem Objekt kann wie folgt gearbeitet werden, ansonsten verkompliziert sich die Berechnung etwas: Insbesondere nach Ermittlung der genauen Zeitdifferenzen und Zeitdrift zwischen dem dritten und ersten Objekt und zwischen dem zweiten und dritten Objekt kann für einen begrenzten Zeitraum (z.B. 100ms) zu jeder Zeit die ausreichend genaue Zeitdifferenz zwischen erstem und zweitem Objekt berechnet werden.

Am zweiten Objekt werden die IQ Werte bzw. Phasen/Amplituden auf mindestens 2 (bis zu n) Frequenzen (FO bis Fn) eines Signals des ersten Objekts bestimmt.

Am zweiten Objekt werden insbesondere die IQ Werte bzw. Phasen/Amplituden auf mindestens 2 (bis zu n) Frequenzen (FO' bis Fn') eines Signals des mindestens einen dritten Objekts bestimmt.

Sind dazu beispielswiese die Umschaltzeitpunkte zwischen den Frequenzen FO bis Fn' und/oder FO bis Fn und/oder deren zeitliche Relation bekannt, kann das ein Objekt, beispielsweise das erste oder zweite Objekt, auf Grund der Zeitsynchronisation zumindest mit dem dritten Objekt die Umschaltzeiten zwischen den Frequenzen in FO' bis Fn' bestimmt werden. Werden dann die Zeiten des Empfangs des Umschaltens gemessen, so lassen sich daraus direkt Laufzeiten, insbesondere Pulslaufzeit (ToF), bestimmen.

Durch die Umschaltung mit bekanntem oder ohne Phasensprung lässt sich aber auch die Frequenzverschiebung durch den Frequenzwechsel direkt messen. Dies gilt sowohl für die Signale des ersten als auch des mindestens einen dritten Objekts, die am zweiten, aber auch teilweise am ersten oder dritten, Objekt empfangen werden. Bereits allein dadurch kann das zweite Objekt sowohl die Entfernung zum ersten als auch zum mindestens einen dritten Objekt bestimmen, beispielsweise mittels

$$\text{Entfernung} = \text{dPhasenverschiebung } (f1,f2) / 2Pi / \text{dFrequenz}(f1,f2) * c$$

mit c gleich der Lichtgeschwindigkeit und
dPhasenverschiebung (f1,f2) gleich der gemessenen Änderung der Phasenverschiebung am Empfänger durch die Frequenzänderung von f1 nach f2, korrigiert um den Phasensprung am Sender beim Umschalten von f1 nach f2 und dFrequenz(f1,f2) gleich der Differenz zwischen den Frequenzen f1 und f2

Dabei ist die Änderung der Phasenverschiebung insbesondere bedingt durch die Änderung der Frequenz, bei näherungsweise gleichem Abstand. Die Phasenverschiebung ist dabei durch die Entfernung bedingt. Die durch die Frequenzänderung bedingte Änderung der Phasenverschiebung oder ist dadurch bedingt, dass bei, insbesondere näherungsweise gleicher Entfernung bei beiden Messungen, unterschiedlich viele Wellenzüge auf die Entfernung passen und dadurch die Phasenverschiebung, die durch die Entfernung bedingt ist, zwischen den Frequenzen unterschiedlich ausfällt. Diese Änderung der Phasenverschiebung auf Grund der Frequenz ist der durch die Frequenzänderung bedingte Phasenwechsel. Beim Messen ergeben sich dabei Probleme, denn die Phasenmessung ist jeweils abhängig von einer Referenz und kann auch beim Umschalten zum Senden der unterschiedlichen Frequenzen ein, häufig undefinierter, Phasensprung entstehen. Somit wird zum Senden, und insbesondere auch zum Empfangen, bevorzugt phasenkohärent, also mit einem Phasensprung von null, umgeschaltet. Es reicht aber auch aus, den Phasensprung zu ermitteln oder zu kennen. Dann kann man die durch die Frequenzänderung Phasenänderung bestimmen durch die gemessene Phasenänderung korrigiert um den Phasensprung bei der Umschaltung des Senders und den Phasensprung beim Umschalten am Empfänger zur Messung der gemessenen Phasenänderung.

Weisen die Umschaltzeitpunkte des ersten und des mindestens einen dritten Objekts eine ableitbare, erkennbare, kommunizierte und/oder vorbestimmte zeitliche Beziehung auf, was bevorzugt wird, können dadurch weitere Informationen zur Verbesserung der Messung gewonnen werden. Sind dem mindestens zweiten Objekt beispielsweise die Umschaltzeitpunkte zwischen Frequenzen des mindesten einen dritten Objekts bekannt und/oder werden ihm diese bekannt gemacht, was bevorzugt wird, so kann es aus der Relation der Umschaltzeitpunkte die Umschaltzeitpunkte der Frequenzen des ersten Objekts, zumindest in Abhängigkeit der Entfernung zwischen ersten und mindestens einem dritten Objekt bestimmen, was zu einer weiteren Verbesserung führt.

Sind dem mindestens zweiten Objekt beispielsweise die Umschaltzeitpunkte zwischen Frequenzen des ersten Objekts bekannt und/oder werden ihm diese bekannt gemacht, was bevorzugt wird, so kann es direkt die Laufzeit (Pulslaufzeit, ToF) des Signals vom ersten zum zweiten Objekt und damit die Entfernung bestimmen. Aber auch allein schon auf Grund der Frequenzumschaltung der Abstrahlung der Signale des ersten Objekts ohne oder mit einem bekannten Phasensprung, kann die Entfernung durch das zweite Objekt direkt bestimmt werden, beispielsweise wie oben dargelegt mittels:Entfernung = dPhasenverschiebung (f1,f2) / 2Pi / dFrequenz(f1,f2) * c

Die gemessenen Phasenverschiebungen (Ph) können zur Erhöhung der Genauigkeit (außer für z.B. FO) auf die Zeitunterschiede und/oder Frequenzunterschiede (inkl. Drift) angepasst werden. Dabei reicht es aus, die Drift näherungsweise zu berücksichtigen. Diese zu bestimmen ist aus dem Stand der Technik bekannt und kann beispielsweise durch Bestimmung der Zeitdifferenzen zu verschiedenen Zeiten erfolgen, beispielsweise vor und nach dem Signalaustausch für die Entfernungsmessung.

Dabei kann der Zeitpunkt, zu dem die Uhren synchron sind auch anders liegen, also beispielsweise nicht mit dem Sendezeitpunkt zusammenfallen. Dann kann die Berechnung entsprechend angepasst werden.

Um beispielsweise Multipathing aufzulösen, können die einzelnen Phasen mit den zugehörigen gemessenen Amplituden als komplexe Werte beispielsweise in eine Fouriertransformation gegeben werden oder über super resolution Verfahren, wie MUSIC oder CAPON, in Matrizen eine Spektralschätzung vorgenommen werden.

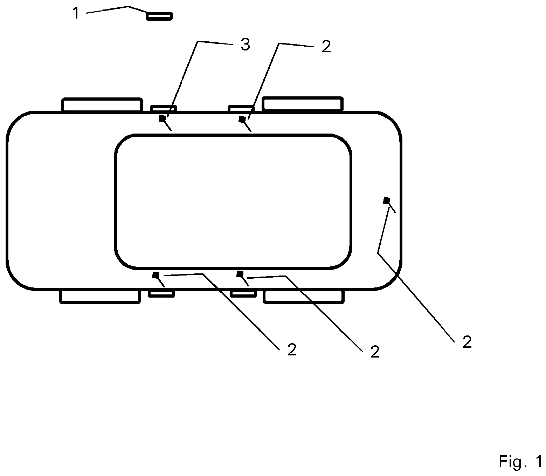

Fig. 1 zeigt rein exemplarisch und nur schematisch und nicht beschränkend ein Auto mit darin angeordneten mehreren zweiten Objekten (2) und einem dritten Objekt (3) sowie ein als Keyfob ausgebildetes erstes Objekt (1). Bei der Ausführung des Verfahrens werden die Abstände jeweils zwischen erstem und jedem zweiten Objekt bestimmt. Erfolgt die Zeitsynchronisation zwischen drittem und zweitem Objekt beispielsweise kabelgebunden können die zweiten Objekte ohne Sender ausgebildet sein und somit passiv oder nicht ortbar sein.

**Patentansprüche**

1.  Verfahren zur, insbesondere direkten, Abstandbestimmung zwischen einem ersten und einem zweiten Objekt (1,2), wobei ein erstes der Objekte (1) mindestens ein Erstobjekt-Signal, insbesondere mehrere Erstobjekt-Signale, mit unterschiedlichen Erstobjekt-Frequenzen sendet und wobei das mindestens eine zweite und mindestens ein drittes Objekt takt- und/oder zeitsynchronisiert sind, wobei das mindestens eine zweite Objekt außer zur Zeitsynchronisation keine Signale und/oder das mindestens eine zweite Objekt keine zur Abstandsbestimmung genutzten Signale sendet und/oder abgesehen von der Zeitsynchronisation passiv ist, **dadurch gekennzeichnet, dass** das mindestens eine dritte Objekt (3) mindestens ein Drittobjektsignal sendet wobei das mindestens eine Drittobjekt-Signal unterschiedliche Drittobjekt- Frequenzen aufweist, und das mindestens eine zweite Objekt die Erstobjektsignale des ersten Objekts und die Drittobjektsignale des mindestens einen dritten Objekts empfängt und basierend auf Frequenzen und Phasen dieser empfangenen Erstobjektsignale und Drittobjektsignale die Entfernung zwischen dem ersten und dem mindestens einen zweiten Objekt bestimmt wird, wobei

    das dritte Objekt zwischen mindestens zwei Drittobjekt-Frequenzen phasenkohärent wechselt und/oder so wechselt, dass
    der Phasenunterschied am ersten und/oder zweiten Objekt bekannt ist und/oder der Phasenunterschied dem ersten und/oder zweiten Objekt bekannt gemacht wird,
    wobei die Kenntnis über den Phasensprung beim Wechsel der Frequenz genutzt wird,
    und/oder wobei das erste Objekt zwischen mindestens zwei der Erstobjekt-Frequenzen des mindestens einen Erstobjekt-Signals phasenkohärent wechselt und/oder so wechselt, dass
    der Phasenunterschied am zweiten und/oder dritten Objekt bekannt ist und/oder der Phasenunterschied dem zweiten und/oder dritten Objekt bekannt gemacht wird,
    wobei die Kenntnis über den Phasensprung beim Wechsel der Frequenz genutzt wird.

2.  Verfahren nach Anspruch 1, wobei das erste Objekt jeweils mindestens ein Erstobjektsignal vor oder nach dem mindestens einen Drittobjektsignal, insbesondere jedes dritten Objekts, sendet, wobei insbesondere das erste Objekt mit dem mindestens einen, insbesondere jedem, dritten Objekt einen Signalaustausch, insbesondere beidseitiges Frequenzhopping, durchführt, bei dem insbesondere jedes der am Signalaustausch jeweils beteiligten zwei Objekte in einer festgelegten und/oder vorbestimmten Abfolge jeweils mindestens ein Signal, jeweils aufweisend unterschiedliche Frequenzen, insbesondere ein Frequenzhopping, sendet und wobei insbesondere das erste Objekt im mindestens einen Erstobjekt-Signal und/oder das mindestens eine dritte Objekt im mindestens einen Drittobjekt-Signal zwischen den unterschiedlichen Frequenzen phasenkohärent wechselt/n und/oder so wechselt/n, dass der Phasenunterschied beim Frequenzwechsel, insbesondere am zweiten, ersten und/oder mindestens einen dritten Objekt, bekannt ist und/oder der Phasenunterschied beim Frequenzwechsel, insbesondere dem zweiten, ersten und/oder dritten Objekt, bekannt gemacht wird.

3.  Verfahren nach einem der vorstehenden Ansprüche, wobei für am mindestens einen zweiten Objekt empfangene Erst- und/oder Drittobjektsignale je, insbesondere je empfangener Frequenz und/oder Erst- und/oder Drittobjektfrequenz und/oder jeder Frequenz des Frequenzhoppings, ein zu deren Amplitude proportionaler Wert und ein Phasenwert bestimmt wird und insbesondere daraus jeweils eine komplexe Zahl bestimmt wird, die für die Abstandsbestimmung zwischen dem ersten und dem zweiten Objekt genutzt wird, insbesondere durch Erstellen eines Vektors aus den komplexen Zahlen und/oder einer Autokorrelationsmatrix, insbesondere je empfangenem Erst- und/oder Drittobjektsignal.

4.  Verfahren nach einem der vorstehenden Ansprüche, wobei das zweite und das mindestens eine dritte Objekt in fester relativer räumlicher Lage und/oder Orientierung angeordnet sind.

5.  Verfahren nach einem der vorstehenden Ansprüche, wobei das erste Objekt ein Autorisierungsmittel, wie Keyfob oder Handy, ist und wobei insbesondere das zweite und dritte Objekt Teil einer Anordnung sind, zu der mittels des Autorisierungsmittels Zugang angestrebt und/oder gewährt wird, wobei die Anordnung insbesondere ein Gebäude, ein Kraftfahrzeug oder eine Barriere, ein Automat und/oder Computer ist.

6.  Verfahren nach einem der vorstehenden Ansprüche, wobei das dritte Objekt das mindestens eine Erstobjekt-Signal empfängt und/oder Informationen über das mindestens eine empfangene Erstobjekt-Signal bereitstellt und diese bei der Berechnung der Entfernung verwendet werden und/oder wobei das erste Objekt die Drittobjekt-Signale empfängt und Informationen über die empfangenen Drittobjekt-Signale bereitstellt und/oder diese bei der Berechnung der Entfernung verwendet werden.

7. Verfahren nach einem der vorstehenden Ansprüche, wobei mindestens eines der Objekte mindestens eine Phasenkorrekturinformation aus einem empfangen Erst- oder Drittobjektsignal bestimmt, die bei der Abstandsberechnung verwendet wird, insbesondere das dritte Objekt mindestens eine Phasenkorrekturinformation aus den Erstobjekt-Signalen ermittelt und/oder das erste Objekt mindestens eine Phasenkorrekturinformation aus den Drittobjekt-Signalen ermittelt und/oder das zweite Objekt mindestens eine Phasenkorrekturinformation aus den Erst- und/oder Drittobjekt-Signalen ermittelt und wobei die mindestens eine Phasenkorrekturinformation bei der Abstandsberechnung verwendet werden.

8. Verfahren nach einem der vorstehenden Ansprüche, wobei die Zeitpunkte und/oder ein Zeitplan der Abstrahlungen des mindestens einen Drittobjekt- und/oder des Erstobjekt-Signals und/oder deren Merkmalen vorbestimmt ist/sind und/oder dem zweiten Objekt bekannt ist/sind und/oder bei der Abstandsberechnung berücksichtigt wird/werden.

9. Verfahren nach einem der vorstehenden Ansprüche, wobei das Verfahren die Synchronisation der Zeiten und/oder Takte im zweiten und dritten Objekt beinhaltet, drahtlos oder kabelgebunden.

10. Verfahren nach einem der vorstehenden Ansprüche, wobei die Entfernung zwischen dem ersten und dem zweiten Objekt bestimmt wird, ohne dazu die Entfernung zwischen erstem und drittem Objekt zu bestimmen und/oder wobei die Entfernung zwischen dem ersten und dem zweiten Objekt unabhängig von der Entfernung zwischen erstem und drittem Objekt bestimmt wird.

11. Verfahren nach einem der vorstehenden Ansprüche, wobei das Verfahren nach einem der vorstehenden Verfahren mit einer Mehrzahl zweiter Objekte und mit genau einem gemeinsamen ersten und insbesondere mindestens einem gemeinsamen dritten Objekt, durchgeführt wird und wobei die berechneten Abstände, insbesondere zwischen dem ersten und der Mehrzahl zweiter Objekte, genutzt werden, um eine Kartierung und/oder Positionsbestimmung des ersten Objekts durchzuführen,

12. Verfahren nach Anspruch 11, wobei insbesondere die Mehrzahl zweiter und/oder dritter Objekte eine feste Lage und/oder Orientierung zueinander aufweisen.

13. System aufweisend mindestens ein erstes, ein zweites, insbesondere eine Mehrzahl größer eins, insbesondere größer zwei, zweiter Objekte (1,2), und mindestens ein drittes Objekt (3), wobei das erste Objekt (1) zur Abstrahlung mindestens eines Erstobjekt-Signals mit unterschiedlichen Frequenzen eingerichtet ist und wobei alle Objekte zum Empfang von Signalen eingerichtet sind, wobei das mindestens eine zweite und das dritte Objekt eingerichtet sind, eine Takt- und/oder Zeitsynchronisation durchzuführen und wobei das System mindestens eine Steuerung aufweist, die eingerichtet ist, dass erfindungsgemäße Verfahren durchzuführen und dadurch mindestens eine Entfernung zwischen mindestens einem zweiten Objekt und dem ersten Objekt zu bestimmen,
**dadurch gekennzeichnet, dass**
das mindestens eine dritte Objekt zur Abstrahlung mindestens eines Drittobjektsignals mit unterschiedlichen Drittobjekt-Frequenzen eingerichtet ist und das zweite Objekt eingerichtet ist, die Erstobjektsignale des ersten Objekts und die Drittobjektsignale des dritten Objekts zu empfangen und basierend auf Frequenzen und Phasen dieser empfangenen Erstobjektsignale und Drittobjektsignale die Entfernung zwischen dem ersten und dem mindestens einen zweiten Objekt zu bestimmen,

wobei das dritte Objekt eingerichtet ist, zwischen mindestens zwei Drittobjekt-Frequenzen phasenkohärent zu wechseln und/oder so zu wechseln, dass
der Phasenunterschied am ersten und/oder zweiten Objekt bekannt ist und/oder der Phasenunterschied dem ersten und/oder zweiten Objekt bekannt gemacht wird,
wobei die Kenntnis über den Phasensprung beim Wechsel der Frequenz genutzt wird,
und/oder wobei das erste Objekt eingerichtet ist, zwischen mindestens zwei der Erstobjekt-Frequenzen des mindestens einen Erstobjekt-Signals phasenkohärent zu wechseln und/oder so zu wechseln, dass
der Phasenunterschied am zweiten und/oder dritten Objekt bekannt ist und/oder der Phasenunterschied dem zweiten und/oder dritten Objekt bekannt gemacht wird
wobei die Kenntnis über den Phasensprung beim Wechsel der Frequenz genutzt wird.

14. Zugangssystem aufweisend mindestens eine Zugangsbeschränkungsvorrichtung, wobei die Zugangsbeschränkungsvorrichtung eingerichtet ist, den Zugang zu gewähren und/oder zu verweigern, insbesondere mittels eines Zugangsbeschränkungsmittels, ferner das in Anspruch 13 bezeichnete System umfassend.

**Claims**

1. A method for determining the distance, in particular directly, between a first and a second object (1, 2), wherein a first of the objects (1) transmits at least one first-object signal, in particular several first-object signals, at different first-object frequencies, and wherein said at least one second and at least one third object are clock- and/or time-synchronised, wherein said at least one second object transmits no signals other than for time synchronisation and/or said at least one second object transmits no signals used for distance determination and/or is passive apart from time synchronisation, **characterised in that** said at least one third object (3) transmits at least one third-object signal, wherein said at least one third-object signal has different third-object frequencies, and said at least one second object receives the first object signals from the first object and the third object signals from said at least one third object, and the distance between the first object and said at least one second object is determined based on the frequencies and phases of these received first object signals and third object signals, wherein

   the third object switches between at least two third-object frequencies in a phase-coherent manner and/or switches in such a way that
   the phase difference at the first and/or second object is known and/or the phase difference is made known to the first and/or second object,
   whereby knowledge of the phase shift during the frequency change is utilised, and/or whereby the first object switches phase-coherently between at least two of the first-object frequencies of said at least one first-object signal and/or switches in such a way that
   the phase difference at the second and/or third object is known and/or the phase difference is made known to the second and/or third object in a phase-coherent manner,
   wherein the knowledge of the phase jump is utilised during the frequency change.

2. A method according to claim 1, wherein the first object transmits at least one first-object signal before or after said at least one third-object signal, in particular each third object, wherein in particular the first object performs a signal exchange, in particular bidirectional frequency hopping, with said at least one, in particular each, third object, in which, in particular, each of the two objects involved in the signal exchange transmits, in a fixed and/or predetermined sequence, at least one signal, each having different frequencies, in particular a frequency hopping, and wherein, in particular, the first object in said at least one first-object signal and/or said at least one third object in said at least one third-object signal switches/switch between the different frequencies in a phase-coherent manner and/or switches/switch such that the phase difference during the frequency change, in particular at the second, first and/or at least one third object, is known and/or the phase difference during the frequency change, in particular at the second, first and/or third object, is made known.

3. A method according to any one of the preceding claims, wherein for first and/or third object signals received at said at least one second object, in particular for each received frequency and/or first and/or third object frequency and/or each frequency of the frequency hopping, a value proportional to their amplitude and a phase value are determined, and in particular a complex number is determined from each of these, which is used for determining the distance between the first and the second object, in particular by creating a vector from the complex numbers and/or an autocorrelation matrix, in particular for each received first and/or third object signal.

4. A method according to one of the preceding claims, wherein the second and said at least one third object are arranged in a fixed relative spatial position and/or orientation.

5. A method according to one of the preceding claims, wherein the first object is a remote authorisation device, such as a key fob or mobile phone, and wherein, in particular, the second and third objects form part of an arrangement to which access is sought and/or granted by means of the authorisation device, the arrangement being, in particular, a building, a motor vehicle or a barrier, a vending machine and/or a computer.

6. A method according to any of the preceding claims, wherein the third object receives said at least one first-object signal and/or provides information about said at least one received first-object signal, and this is used in the calculation of the distance, and/or wherein the first object receives the third-object signals and provides information about the received third-object signals, and/or this is used in the calculation of the distance.

7. A method according to any one of the preceding claims, wherein at least one of the objects determines at least one phase correction piece of information from a received first or third object signal, which is used in the distance calculation, in particular, the third object determines at least one phase correction parameter from the first object signals and/or the first object determines at least one phase correction parameter from the third object signals and/or the second object determines at least one phase correction parameter from the first and/or third object signals, and wherein said at least one phase correction parameter is used in the distance calculation.

8. A method according to one of the preceding claims, wherein the timings and/or the timing schedule of the transmissions of said at least one third-object and/or first-object signal and/or their characteristics are predetermined and/or are known to the second object and/or are taken into account in the distance calculation.

9. A method according to one of the preceding claims, wherein the method comprises synchronising the times and/or clock signals in the second and third objects, wirelessly or via a cable.

10. A method according to any of the preceding claims, wherein the distance between the first and second objects is determined without determining the distance between the first and third objects, and/or wherein the distance between the first and second objects is determined independently of the distance between the first and third objects.

11. A method according to any of the preceding claims, wherein the method is carried out according to one of the preceding methods with a plurality of second objects and with exactly one common first object and, in particular, at least one common third object, and wherein the calculated distances, in particular between the first object and the plurality of second objects, are used to perform mapping and/or positioning of the first object,

12. A method according to claim 11, wherein, in particular, the plurality of second and/or third objects have a fixed position and/or orientation relative to one another.

13. A system comprising at least one first, one second, in particular a plurality greater than one, in particular greater than two, second objects (1, 2), and at least one third object (3), wherein the first object (1) is configured to transmit at least one first-object signal at different frequencies and wherein all objects are configured to receive signals, wherein said at least one second and the third object are configured to perform clock and/or time synchronisation, and wherein the system comprises at least one controller configured to perform the method according to the invention and thereby to determine at least one distance between at least one second object and the first object, **characterised in that** said at least one third object is configured to transmit at least one third-object signal at different third-object frequencies, and the second object is configured receiving the first-object signals of the first object and the third-object signals of the third object, and determining the distance between the first object and said at least one second object based on the frequencies and phases of these received first-object signals and third-object signals,

   wherein the third object is configured to switch between at least two third-object frequencies in a phase-coherent manner and/or to switch in such a way that
   the phase difference at the first and/or second object is known and/or the phase difference is made known to the first and/or second object,
   wherein knowledge of the phase shift upon a change in frequency is utilised, and/or wherein the first object is configured to switch phase-coherently between at least two of the first-object frequencies of said at least one first-object signal and/or to switch in such a way that
   the phase difference at the second and/or third object is known and/or the phase difference is made known to the second and/or third object,
   whereby knowledge of the phase shift upon frequency change is utilised.

14. An access system comprising at least one access control device, wherein the access control device is configured to grant and/or deny access, in particular by means of an access control means, further comprising the system referred to in claim 13.

**Revendications**

1. Procédé pour déterminer la distance, en particulier directement, entre un premier et un deuxième objet (1, 2), dans lequel un premier des objets (1) émet au moins un signal de premier objet, en particulier plusieurs signaux de premier objet, à différentes fréquences de premier objet, et dans lequel ledit au moins un deuxième et ledit au moins un troisième objet sont synchronisés en fréquence et/ou synchronisés dans le temps, dans lequel ledit au moins un deuxième objet n'émet aucun signal autre que ceux destinés à la synchronisation temporelle et/ou ledit au moins un deuxième objet n'émet aucun signal utilisé pour la détermination de la distance et/ou est passif en dehors de la synchronisation temporelle, **caractérisé en ce que** ledit au moins un troisième objet (3) émet au moins un signal de troisième objet, dans lequel ledit au moins un signal de troisième objet a différentes fréquences de troisième objet, et ledit au moins un deuxième objet reçoit les signaux du premier objet provenant du premier objet et les signaux du troisième objet provenant dudit au moins un troisième objet, et la distance entre le premier objet et ledit au moins un deuxième objet est déterminée sur la base des fréquences et des phases de ces signaux du premier objet et de ces signaux du troisième objet reçus, dans lequel

le troisième objet commute entre au moins deux fréquences de troisième objet de manière cohérente en phase et/ou commute de telle sorte que
la différence de phase au niveau du premier et/ou du deuxième objet soit connue et/ou que la différence de phase soit communiquée au premier et/ou au deuxième objet,
ce qui permet d'utiliser la connaissance du déphasage pendant le changement de fréquence, et/ou ce qui permet au premier objet de commuter de manière cohérente en phase entre au moins deux des fréquences du premier objet du signal du premier objet et/ou de commuter de telle sorte que
la différence de phase au niveau du deuxième et/ou du troisième objet soit connue et/ou que la différence de phase soit communiquée au deuxième et/ou au troisième objet de manière cohérente en phase,
dans lequel la connaissance du saut de phase est utilisée pendant le changement de fréquence.

2. Procédé selon la revendication 1, dans lequel le premier objet émet au moins un signal du premier objet avant ou après ledit au moins un signal du troisième objet, en particulier chaque troisième objet, dans lequel, en particulier, le premier objet effectue un échange de signaux, en particulier un saut de fréquence bidirectionnel, avec ledit au moins un, en particulier chaque, troisième objet, dans lequel, en particulier, chacun des deux objets impliqués dans l'échange de signaux émet, selon une séquence fixe et/ou prédéterminée, au moins un signal, chacun ayant des fréquences différentes, en particulier un saut de fréquence, et dans lequel, en particulier, le premier objet dans ledit au moins un signal de premier objet et/ou ledit au moins un troisième objet dans ledit au moins un signal de troisième objet commute/commutent entre les différentes fréquences de manière cohérente en phase et/ou commute/commutent de telle sorte que la différence de phase pendant le changement de fréquence, en particulier au niveau du deuxième, premier et/ou au moins un troisième objet, est connue et/ou la différence de phase pendant le changement de fréquence, en particulier au niveau du deuxième, du premier et/ou du troisième objet, est rendue connue.

3. Procédé selon l'une quelconque des revendications précédentes, dans lequel, pour les signaux du premier et/ou du troisième objet reçus au niveau dudit au moins un deuxième objet, en particulier pour chaque fréquence reçue et/ou fréquence du premier et/ou du troisième objet et/ou chaque fréquence du saut de fréquence, une valeur proportionnelle à leur amplitude et une valeur de phase sont déterminées, et en particulier un nombre complexe est déterminé à partir de chacune d'entre elles, lequel est utilisé pour déterminer la distance entre le premier et le deuxième objet, en particulier en créant un vecteur à partir des nombres complexes et/ou une matrice d'autocorrélation, en particulier pour chaque signal reçu du premier et/ou du troisième objet.

4. Procédé selon l'une des revendications précédentes, dans lequel le deuxième et ledit au moins un troisième objet sont disposés dans une position spatiale relative et/ou une orientation fixe.

5. Procédé selon l'une des revendications précédentes, dans lequel le premier objet est un dispositif d'autorisation à distance, tel qu'un porte-clés ou un téléphone mobile, et dans lequel, en particulier, les deuxième et troisième objets font partie d'un dispositif auquel l'accès est demandé et/ou accordé au moyen du dispositif d'autorisation, le dispositif étant, en particulier, un bâtiment, un véhicule à moteur ou une barrière, un distributeur automatique et/ou un ordinateur.

6. Procédé selon l'une quelconque des revendications précédentes, dans lequel le troisième objet reçoit ledit au moins un signal du premier objet et/ou fournit des informations sur ledit au moins un signal du premier objet reçu, et celles-ci sont utilisées dans le calcul de la distance, et/ou dans lequel le premier objet reçoit les signaux du troisième objet et fournit des informations sur les signaux du troisième objet reçus, et/ou celles-ci sont utilisées dans le calcul de la distance.

7. Procédé selon l'une quelconque des revendications précédentes, dans lequel au moins l'un des objets détermine au moins une information de correction de phase à partir d'un signal de premier ou de troisième objet reçu, qui est utilisée dans le calcul de la distance, en particulier, le troisième objet détermine au moins un paramètre de correction de phase à partir des signaux du premier objet et/ou le premier objet détermine au moins un paramètre de correction de phase à partir des signaux du troisième objet et/ou le deuxième objet détermine au moins un paramètre de correction de phase à partir des signaux du premier et/ou du troisième objet, et dans lequel ledit au moins un paramètre de correction de phase est utilisé dans le calcul de la distance.

8. Procédé selon l'une des revendications précédentes, dans lequel les instants et/ou le calendrier des transmissions dudit au moins un signal du troisième objet et/ou du premier objet et/ou leurs caractéristiques sont prédéterminés et/ou sont connus du deuxième objet et/ou sont pris en compte dans le calcul de la distance.

9. Procédé selon l'une des revendications précédentes, dans lequel le procédé comprend la synchronisation des temps et/ou des signaux d'horloge dans les deuxième et troisième objets, sans fil ou via un câble.

10. Procédé selon l'une quelconque des revendications précédentes, dans lequel la distance entre le premier et le deuxième objets est déterminée sans devoir déterminer la distance entre le premier et le troisième objets, et/ou dans lequel la distance entre le premier et le deuxième objets est déterminée indépendamment de la distance entre le premier et le troisième objets.

11. Procédé selon l'une quelconque des revendications précédentes, dans lequel le procédé est mis en œuvre selon l'un des procédés précédents avec une pluralité de seconds objets et avec exactement un premier objet commun et, en particulier, au moins un troisième objet commun, et dans lequel les distances calculées, en particulier entre le premier objet et la pluralité de seconds objets, sont utilisées pour effectuer la cartographie et/ou le positionnement du premier objet,

12. Procédé selon la revendication 11, dans lequel, en particulier, la pluralité de seconds et/ou de troisièmes objets ont une position et/ou une orientation fixes les uns par rapport aux autres.

13. Système comprenant au moins un premier, un deuxième, en particulier une pluralité supérieure à un , en particulier supérieure à deux, de deuxièmes objets (1, 2), et au moins un troisième objet (3), dans lequel le premier objet (1) est configuré pour émettre au moins un signal de premier objet à différentes fréquences et dans lequel tous les objets sont configurés pour recevoir des signaux, dans lequel ledit au moins un deuxième et le troisième objet sont configurés pour effectuer une synchronisation d'horloge et/ou de temps, et dans lequel le système comprend au moins un contrôleur configuré pour mettre en œuvre le procédé selon l'invention et déterminer ainsi au moins une distance entre au moins un deuxième objet et le premier objet, **caractérisé en ce que** ledit au moins un troisième objet est configuré pour émettre au moins un signal de troisième objet à différentes fréquences de troisième objet, et le deuxième objet est configuré pour recevoir les signaux de premier objet du premier objet et les signaux de troisième objet du troisième objet, et pour déterminer la distance entre le premier objet et ledit au moins un deuxième objet sur la base des fréquences et des phases de ces signaux de premier objet et de troisième objet reçus,

dans lequel le troisième objet est configuré pour commuter entre au moins deux fréquences de troisième objet de manière cohérente en phase et/ou pour commuter de telle sorte que
la différence de phase au niveau du premier et/ou du deuxième objet soit connue et/ou que la différence de phase soit communiquée au premier et/ou au deuxième objet,
dans lequel la connaissance du déphasage lors d'un changement de fréquence est utilisée, et/ou dans lequel le premier objet est configuré pour commuter de manière cohérente en phase entre au moins deux des fréquences du premier objet dudit au moins un signal du premier objet et/ou pour commuter de telle sorte que
la différence de phase au niveau du deuxième et/ou du troisième objet soit connue et/ou que la différence de phase soit communiquée au deuxième et/ou au troisième objet,
ce qui permet d'utiliser la connaissance du déphasage lors d'un changement de fréquence.

14. Système d'accès comprenant au moins un dispositif de contrôle d'accès, dans lequel le dispositif de contrôle d'accès est configuré pour accorder et/ou refuser l'accès, en particulier au moyen d'un moyen de contrôle d'accès, comprenant en outre le système visé à la revendication 13.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2710398 B1
- US 2020118372 A1

- DE 112014004426 T5

**In der Beschreibung aufgeführte Nicht-Patentliteratur**

- **CASAS et al.** Synchronization in Wireless Sensor Networks Using Bluetooth. *Third International Workshop on Intelligent Solutions in Embedded Systems*, 2005, ISBN 3-902463-03-1